# EUROPEAN PATENT APPLICATION

(11) **EP 4 431 181 A1**
(43) Date of publication of application: **18.09.2024**
(21) Application number: 22892589.7
(22) Date of filing: 26.10.2022
(51) Int. Cl.: B01J 35/04, B01D 53/94, B01J 23/63, B01J 35/10, F01N 3/10, F01N 3/28

(54) **CATALYST FOR EXHAUST GAS PURIFICATION AND EXHAUST GAS PURIFICATION METHOD USING SAME**

(30) Priority: 11.11.2021 JP 2021184009
(71) Applicant: Umicore Shokubai Japan Co., Ltd., Tokoname-shi Aichi 479-0882 (JP)
(72) Inventor: OGINO, Yuji, Kobe-shi, Hyogo 650-0047 (JP); HANEDA, Yusuke, Kobe-shi, Hyogo 650-0047 (JP); KINUGASA, Keisuke, Kobe-shi, Hyogo 650-0047 (JP); GOTO, Yosuke, Kobe-shi, Hyogo 650-0047 (JP); MIKITA, Kosuke, Kobe-shi, Hyogo 650-0047 (JP)
(74) Representative: Gilani, Anwar
(86) International application number: PCT/JP2022/039863
(87) International publication number: WO 2023/085089

(57) **Abstract**

An object of the present invention is to provide a means for improving catalytic performance of a catalyst for exhaust gas purification. The invention relates to a catalyst for exhaust gas purification, containing a first catalyst layer and a second catalyst layer sequentially laminated onto a three-dimensional structure, in which the first catalyst layer contains rhodium, the second catalyst layer contains palladium, strontium, and alumina, the strontium content in the second catalyst layer (in terms of strontium oxide) per 1 liter of the three-dimensional structure is more than 0 g/L and less than 15 g/L, and the catalyst for exhaust gas purification has a pore volume of pores having a pore size of 2 nm or more and 40 nm or less of more than 0.26 mL/g in a pore volume distribution measured by nitrogen adsorption method.

## Description

### Technical Field

The present invention relates to a catalyst for exhaust gas purification and an exhaust gas purification method using the same.

### Background Art

Regarding treatment techniques of exhaust gas generated from internal combustion engines, a large number of techniques have been conventionally proposed. Especially, regarding treatment of exhaust gas from a gasoline engine, various techniques have been proposed for the purpose of removal of hydrocarbons (HC), carbon monoxide (CO), and nitrogen oxides (NOx) contained in the exhaust gas. For example, as a catalyst for purifying exhaust gas, a three-way catalyst containing a first layer containing palladium, alumina, and a ceria-zirconia composite oxide and a second layer containing rhodium, alumina, and a ceria-zirconia composite oxide, sequentially laminated on a three-dimensional structure have been proposed (JP2009-541041A (corresponding to US2010/0263357)).

### Summary of Invention

However, considering that automobile exhaust gas regulations have been strengthened in recent years, there is a demand for further improvement in catalytic performance of catalysts for exhaust gas purification.

The present invention has been made in view of the aforementioned situation, and an object thereof is to provide a means for improving catalytic performance of a catalyst for exhaust gas purification.

The present inventors made intensive studies in order to solve the above-described problems. As a result, they found that the problems can be solved by sequentially forming a catalyst layer containing rhodium and a catalyst layer containing palladium and a specific amount of strontium onto a three-dimensional structure, and increasing the volume of pores having a specific pore size, whereby the invention was completed.

Specifically, a first aspect of the invention relates to a catalyst for exhaust gas purification, containing a first catalyst layer and a second catalyst layer sequentially laminated onto a three-dimensional structure, in which the first catalyst layer contains rhodium, the second catalyst layer contains palladium, strontium and an alumina, the strontium content in the second catalyst layer (in terms of strontium oxide) per 1 liter of the three-dimensional structure is more than 0 g/L and less than 15 g/L, and the catalyst for exhaust gas purification has a pore volume of pores having a pore size of 2 nm or more and 40 nm or less of more than 0.26 mL/g in a pore volume distribution measured by nitrogen adsorption method.

A second aspect of the invention relates to a method for purifying exhaust gas of a gasoline engine, including treating exhaust gas emitted from a gasoline engine using the catalyst for exhaust gas purification of the invention.

### Brief Description of Drawings

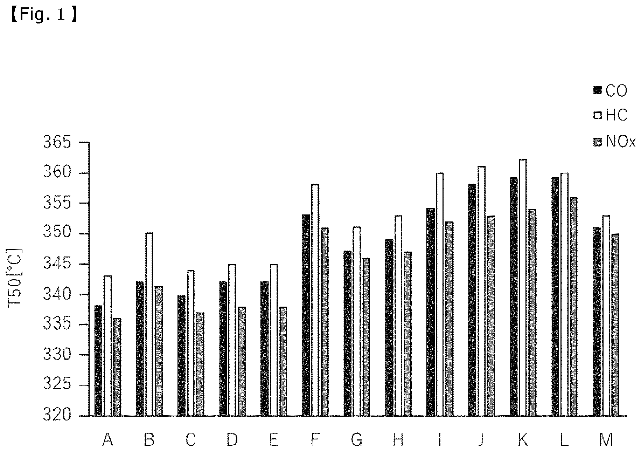

[Fig. 1] Fig. 1 is a bar graph showing T50 (°C) for carbon monoxide (CO), hydrocarbons (HC), and nitrogen oxides (NOx) of catalysts A to M.

### Description of Embodiments

A first aspect of the invention relates to a catalyst for exhaust gas purification, containing a first catalyst layer and a second catalyst layer sequentially laminated onto a three-dimensional structure, in which the first catalyst layer contains rhodium, the second catalyst layer contains palladium, strontium and an alumina, the strontium content in the second catalyst layer (in terms of strontium oxide) per 1 liter of the three-dimensional structure is more than 0 g/L and less than 15 g/L, and the catalyst for exhaust gas purification has a pore volume of pores having a pore size of 2 nm or more and 40 nm or less of more than 0.26 mL/g in a pore volume distribution measured by nitrogen adsorption method.

A second aspect of the invention relates to a method for purifying exhaust gas of a gasoline engine, including treating exhaust gas emitted from a gasoline engine using the catalyst for exhaust gas purification of the invention.

According to the invention, catalytic performance can be improved in a catalyst for exhaust gas purification.

In the present specification, the pore volume distribution measured by nitrogen adsorption method will also be referred to simply as "pore volume distribution". The pore volume of pores having a pore size of 2 nm or more and 40 nm or less in a pore volume distribution measured by nitrogen adsorption method will also be referred to simply as "pore volume of pores having a pore size of 2 nm or more and 40 nm or less" or "V₂₋₄₀ₙₘ". The strontium content (in terms of strontium oxide) per 1 liter of the three-dimensional structure will also be referred to simply as a "content of strontium", "Sr content", "content of strontium according to the invention", or "Sr content according to the invention".

In the present specification, the above description of one embodiment of the invention may be applied to other embodiments with appropriate modifications thereto.

Hereinafter, an embodiment of the invention will be described. The invention is not limited to the following embodiment and can be variously modified within the scope of the claims. Throughout the entire specification, an expression of singular form should be understood as also including the concept of the plural form thereof unless otherwise specified. Thus, it should be understood that singular articles (e.g., "a", "an", "the", and the like in the case of English) also include the concept of the plural form thereof unless otherwise specified. Further, it should be understood that terms used in the present specification are used in the meanings generally used in the field unless otherwise specified. Accordingly, unless otherwise defined, all technical terms and scientific terms used in the present specification have the same meanings as commonly understood by a person skilled in the art to which the present invention belongs. If there is a conflict, the present specification (including definitions) takes precedence.

In the present specification, "X to Y" indicating a range includes X and Y and means "X or more and Y or less". In the present specification, "A and/or B" means at least one of A and B, and includes both A and B, or either one of A or B. Unless otherwise specified, operations and measurement of physical properties or the like are performed under the condition of room temperature (20 to 25°C).

### <Catalyst for Exhaust Gas Purification>

A catalyst according to the invention is characterized in that it includes two catalyst layers, in which a first catalyst layer (a lower layer on the three-dimensional structure side) contains rhodium; a second catalyst layer (an upper layer on the side to be brought into contact with exhaust gas) contains palladium, per 1 liter of the three-dimensional structure more than 0 g/L and less than 15 g/L of strontium (in terms of SrO), and an alumina; and a pore volume (V₂₋₄₀ₙₘ) of pores having a pore size of 2 nm or more and 40 nm or less is more than 0.26 mL/g.

A catalyst described in JP2009-541041A (corresponding to US2010/0263357) has the inverse order of lamination to that in the catalyst of the invention (namely, the first catalyst layer contains palladium, strontium, and an alumina; and the second catalyst layer contains rhodium). In that case, since the layer containing rhodium is arranged on the side to be brought into contact with exhaust gas, the NO-CO reaction (reduction reaction of NOx) and the CO-O₂ reaction (oxidation reaction of CO) proceed in the surface layer, and thereby NOx and CO can be efficiently purified. However, in the case of the above-described configuration, since oxygen is consumed by the CO-O₂ reaction in the second catalyst layer, sufficient oxygen does not reach the first catalyst layer (the lower layer on the three-dimensional structure side). Therefore, HC cannot be purified sufficiently (comparison between catalyst A and catalyst L below).

On the other hand, in the catalyst according to the invention, the first catalyst layer (a lower layer on the three-dimensional structure side) contains rhodium, and the second catalyst layer (an upper layer on the side to be brought into contact with exhaust gas) contains palladium, strontium, and an alumina. When the second catalyst layer containing palladium is arranged on the side to be brought into contact with exhaust gas as describedabove, the HC-O₂ reaction and the like (oxidation reaction of HC) proceeds in a surface layer, and thereby hydrocarbons (HC) can be efficiently purified. In addition, NO and CO that have not been completely purified in the second catalyst layer are dispersed into the first catalyst layer (the lower layer on the three-dimensional structure side) containing rhodium and purified by the NO-CO reaction or the like. Here, the catalyst according to the invention has a large pore volume of pores having a pore size of 2 to 40 nm (has a large number of pores having a pore size of 2 to 40 nm). Since exhaust gas molecules pass through the inside of the pores while making contact with the inner wall of the pores, the exhaust gas is moderately retained inside the pores. Therefore, the exhaust gas efficiently contacts with the precious metal

(rhodium or palladium) in each catalyst layer, and can be effectively purified. Meanwhile, in pores having a diameter of more than 40 nm, NO, CO, and HC are less likely to be retained than in pores of 2 to 40 nm, and thus their contribution to an effective purification of exhaust gas is small. In addition, since pores of a refractory inorganic oxide such as an alumina generally contract due to heat, the pore volume thereof decreases through exposure to high temperatures. However, in the invention, since the second catalyst layer, which contacts with exhaust gas having a high temperature, contains both strontium and an alumina, the pore volume can be maintained. Therefore, the catalyst of the invention can be a three-way catalyst that exhibits a high catalytic performance (it can efficiently purify hydrocarbons (HC), carbon monoxide (CO), and nitrogen oxides (NOx) contained in exhaust gas emitted from a gasoline engine, especially after a high-temperature thermal aging). The effect described above is particularly notably exhibited when the second catalyst layer contains a large pore-volume alumina in which a pore volume (V₂₋₄₀ₙₘ) of pores having a pore size of 2 nm or more and 40 nm or less is 0.60 mL/g or more.

The above-described mechanism is a speculation and the invention is not limited to this speculation.

In the catalyst according to the invention, a pore volume (V₂₋₄₀ₙₘ) of pores having a pore size of 2 nm or more and 40 nm or less is more than 0.26 mL/g, preferably more than 0.31 mL/g, and more preferably 0.36 mL/g or more in a pore volume distribution measured by nitrogen adsorption method. Here, when V₂₋₄₀ₙₘ is 0.26 mL/g or less, exhaust gas cannot be sufficiently retained in the catalyst layers. Therefore, a sufficient catalytic performance cannot be exhibited (see catalyst F below). On the other hand, with the pore volume specified with the above-described preferable ranges, exhaust gas can be more efficiently retained inside the pores, and thus it can more efficiently contact with precious metals (rhodium and palladium) to further improve catalytic performance. The larger the pore volume (V₂₋₄₀ₙₘ) of pores having a pore size of 2 nm or more and 40 nm or less, the more preferable it is, and therefore the upper limit thereof is not particularly restricted, and is normally less than 0.75 mL/g and preferably 0.61 mL/g or less. The "pore volume (V₂₋₄₀ₙₘ) of pores having a pore size of 2 nm or more and 40 nm or less in a pore volume distribution measured by nitrogen adsorption method" is a value for the catalyst before use (before the contact with exhaust gas).

The total pore volume of the catalyst according to the invention is, for example, more than 0.41 mL/g, preferably 0.45 mL/g or more, more preferably more than 0.48 mL/g, further preferably 0.51 mL/g or more, and particularly preferably more than 0.51 mL/g. With such a total pore volume, both the dispersion of exhaust gas into the catalyst layers and the retention of the catalyst layers on the refractory three-dimensional structure can be attained. The upper limit of the total pore volume according to the invention is not particularly restricted, and is normally less than 0.96 mL/g and preferably 0.78 mL/g or less. The "total pore volume" is a value for the catalyst before use (before the contact with exhaust gas).

The catalyst according to the invention has a proportion (%) of the pore volume of pores having a pore size of 2 nm or more and 40 nm or less relative to the total pore volume [=(pore volume of pores of 2 nm or more and 40 nm or less)×100/(total pore volume)] of preferably 65.0% or more, more preferably 70.0% or more, and particularly preferably more than 71.0%. Accordingly, exhaust gas can be retained for a longer period inside the pores and the exhaust gas can thus be more efficiently purified. The larger the proportion (%) of the pore volume of pores having a pore size of 2 nm or more and 40 nm or less relative to the total pore volume, the more preferable it is, and therefore the upper limit thereof is 100%, and is acceptable when it is 90% or less and is preferred to be 80.0% or less. The "proportion (%) of the pore volume" is a value for the catalyst before use (before the contact with exhaust gas).

In the present specification, the pore volume of pores having a pore size of 2 nm or more and 40 nm or less in a pore volume distribution measured by nitrogen adsorption method and the total pore volume is obtained based on the pore volume distribution (pore size distribution) in accordance with the following method.

### - Measurement of Pore Volume Distribution (Pore Size Distribution) -

The pore volume distribution (pore size distribution), the pore size (pore diameter), and the pore volume can be measured by known methods, and are preferably measured by nitrogen adsorption method. In a measurement by nitrogen adsorption method, the measurement is performed referring to ISO 15901-3:2007. In the measurement, in order to distinguish the pores of the catalyst from the pores of the three-dimensional structure such as a cordierite carrier, after the three-dimensional structure is coated with catalyst components (namely, with the catalyst in a final product state in which precious metals, an alumina, a ceria-zirconia composite oxide, and the like are supported on the three-dimensional structure), the catalyst components (catalyst layer(s)) which have been applied are peeled off, and the peeled off powder is measured in a fresh state (before thermal aging). Alternatively, in the measurement of the "pore maintenance rate of the catalyst after thermal aging" below, the catalyst components (catalyst layer(s)) which have been applied are peeled off from the catalyst after thermal aging, and the peeled off powder is measured in a state after thermal aging (after thermal aging). The pore size of the three-dimensional structure is normally 500 nm or more, and therefore presence or absence of the three-dimensional structure has no effect on the pore volume distribution of pores sized 40 nm or less. More specifically, the pore size distribution, the pore volume, and the total pore volume are measured by the following method.

The catalyst is subjected to a decompression treatment at 250°C for 2 hours to prepare a sample. By using an automatic specific surface area/pore distribution measuring apparatus (TriStar II Plus 3020 manufactured by Shimadzu Corporation), liquid nitrogen is introduced into the sample, and an adsorption/desorption isotherm of nitrogen at -196°C at a relative pressure (P/saturated vapor pressure) of 0 to 1 is measured. From the adsorption/desorption isotherm obtained and the adsorption amount of nitrogen, the pore size distribution and the total pore volume of each of the catalysts are obtained by Barrett-Joyner-Halenda method (BJH method).

Based on the pore size distribution and the total pore volume (mL/g) obtained, the pore volume (V₂₋₄₀ₙₘ) of pores sized of 2 nm or more and 40 nm or less is obtained. Further, from the pore volume (V₂₋₄₀ₙₘ) of pores having a pore size of 2 nm or more and 40 nm or less and the total pore volume, the proportion (%) of the pore volume (V₂₋₄₀ₙₘ) of pores having a pore size of 2 nm or more and 40 nm or less [=(V₂₋₄₀ₙₘ)×100/(total pore volume)] is obtained.

It is preferred that the catalyst for exhaust gas purification according to the invention can maintain the pore volume (V₂₋₄₀ₙₘ) of pores having a pore size of 2 nm or more and 40 nm or less even after being exposed to exhaust gas from an internal combustion engine having a high temperature for a long period. Accordingly, since exhaust gas can be retained for a longer period inside the pores, the contact between the exhaust gas and precious metals can be improved, and the exhaust gas can be more efficiently purified. Specifically, the pore maintenance rate of the catalyst after thermal aging is preferably 42.0% or more and less than 80.0%, more preferably more than 46.0% and 75.0% or less, further preferably 55.0% or more and less than 75.0%, further more preferably more than 60.0% and less than 72.0%, and particularly preferably more than 60.0% and less than 69.0%.

In the present specification, for the pore maintenance rate of the catalyst after thermal aging, the total pore volume and the pore volume of pores having a pore size of 2 nm or more and 40 nm or less (pore volumes after thermal aging) are measured by the above-described method after treating the catalyst in nitrogen gas flow containing 5 vol% of hydrogen at 1000°C for 10 hours (hereinafter, referred to as a thermal aging). Subsequently, the pore volume of pores having a pore size of 2 nm or more and 40 nm or less (pore volume after thermal aging) is divided by the pore volume of pores having a pore size of 2 nm or more and 40 nm or less (pore volume before thermal aging) before thermal aging (after production and before use) in the catalyst to obtain a proportion (%) [=(V₂₋₄₀ₙₘ pore volume after thermal aging)×100/(V₂₋₄₀ₙₘ pore volume before thermal aging)]. The exhaust gas purification catalyst may be exposed to exhaust gas having a high temperature of more than 1000°C. It is necessary to maintain the exhaust gas purification performance even after exposure to such an exhaust gas having a high temperature. Therefore, in order to simulate a catalyst after having been exposed to a high temperature exhaust gas , exhaust gas purification performance of a catalyst after thermal aging in which the catalyst is treated in nitrogen gas flow containing 5 vol% of hydrogen at 1000°C for 10 hours can be evaluated. The pore size, the pore volume, and the pore size distribution of the catalyst after thermal aging can be measured.

The catalyst for exhaust gas purification according to the invention can be used for the purpose of purifying exhaust gas emitted from a diesel engine or a gasoline engine, and is particularly preferably used for the purpose of purifying exhaust gas emitted from a gasoline engine. Exhaust gas emitted from a gasoline engine is greatly different from exhaust gas emitted from a diesel engine in many aspects such as the substantial absence of particulate matters (PM), the composition of exhaust gas (e.g., CO, NOx, and HC), and HC having a shorter chain than that emitted from a diesel engine. Therefore, even a catalyst with an excellent ability to purify exhaust gas emitted from a diesel engine does not always have an excellent ability to purify exhaust gas emitted from a gasoline engine.

### [First Catalyst Layer]

In the catalyst for exhaust gas purification according to the invention, a first catalyst layer (a lower layer on a three-dimensional structure side) and a second catalyst layer (an upper layer on the side to be brought into contact with exhaust gas) are sequentially laminated onto a three-dimensional structure. Here, the first catalyst layer may be directly arranged on the three-dimensional structure or may be arranged above the three-dimensional structure via another layer. Preferably, the first catalyst layer is arranged directly on the three-dimensional structure.

The first catalyst layer contains rhodium (Rh), and may contain other components. Examples of the other components include an alumina, a ceria-zirconia composite oxide, a refractory inorganic oxide, and a co-catalyst. Among these, from a viewpoint of further improvement of exhaust gas purification efficiency (catalytic performance) and the like, the first catalyst layer preferably further contains a ceria-zirconia composite oxide and more preferably further contains an alumina and a ceria-zirconia composite oxide. It is preferred that the first catalyst layer substantially does not contain a combustion promoter Icontaining a Group 2 element such as magnesium (Mg), calcium (Ca), and barium (Ba) (e.g., barium sulfate (BaSO₄) and barium oxide (BaO)) (e.g., a content of the Group 2 element in the first catalyst layer is less than 0.1 g and preferably 0 g per 1 liter of the three-dimensional structure).

### (Precious Metal)

The first catalyst layer contains rhodium (Rh). The first catalyst layer may contain platinum (Pt) as a precious metal in addition to rhodium, but it is preferred that a precious metal contained in the first catalyst layer is only rhodium.

The used amount (supported amount) of rhodium (Rh) is not particularly restricted, and considering purification performance of exhaust gas (especially NOx), it is preferably 0.001 to 20 g, more preferably 0.01 to 5 g, and most preferably 0.05 to 3 g in terms of the precious metal per 1 liter of the three-dimensional structure.

The used amount (supported amount) of platinum (Pt) when the first catalyst layer further contains platinum is not particularly restricted, and considering purification performance of exhaust gas, it is preferably 0.01 to 20 g, more preferably 0.05 to 10 g, and most preferably more than 0.5 g and less than 5 g in terms of the precious metal per 1 liter of the three-dimensional structure. In this case, the mixing ratio of rhodium and platinum (rhodium: platinum (mass ratio)) is, for example, preferably 1:30 to 1:1.1, more preferably 1:20 to 1:1.3, and particularly preferably 1:5 to 1:1.5. As the range of the mixing ratio of rhodium and platinum approaches the above-described preferable ranges, the exhaust gas purification efficiency can be improved.

As raw material of the precious metal (rhodium and platinum), a nitrate, an acetate, an amine salt, an ammonium salt, or the like can be used, and a nitrate is more preferred.

The amount of the precious metal source (rhodium source and platinum source) is not particularly restricted, and is preferably an amount that meets the above-described content (supported amount) of each of the precious metals. When two or more precious metal sources are used in combination, the total amount of the precious metal sources is preferably an amount that meets the above-described content (supported amount) of the precious metal.

### (Ceria-Zirconia Composite Oxide)

The first catalyst layer preferably contains a ceria-zirconia composite oxide.

When the first catalyst layer contains a ceria-zirconia composite oxide, the ceria-zirconia composite oxide (CeOz-ZrOz) acts as an oxygen storage material and has an advantage of an especially large oxygen storage/release rate. The oxygen storage material (also referred to as an "oxygen storage/release material") has a function of allowing oxidation/reduction reactions to proceed stably by storing oxygen in an oxidizing atmosphere (lean) and releasing oxygen in a reducing atmosphere (rich) in accordance with fluctuations in an air-fuel ratio (A/F) which changes depending on the operating conditions.

The ceria-zirconia composite oxide may contain at least one kind of metal selected from a group consisting of lanthanum (La), yttrium (Y), neodymium (Nd), and praseodymium (Pr). Specific examples thereof include a ceria-zirconia-lanthana composite oxide and a ceria-zirconia-lanthana-yttria composite oxide.

The BET specific surface area of the ceria-zirconia composite oxide is not particularly restricted, and is preferably 20 to 150 m²/g and more preferably 50 to 90 m²/g. The average secondary particle size of the ceria-zirconia composite oxide is preferably 1 to 50 µm and more preferably 5 to 20 µm. The average secondary particle size of the ceria-zirconia composite oxide means an average particle size (D50) measured with a laser diffraction/scattering particle size analyzer.

The content (supported amount; in terms of oxide) of the ceria-zirconia composite oxide in the first catalyst layer is not particularly restricted and is preferably 5 to 200 g, more preferably 5 to 100 g, and further preferably 10 to 90 g per 1 liter of the three-dimensional structure. The amount of cerium (Ce) contained in the ceria-zirconia composite oxide (oxygen storage material) is, in terms of oxide (CeO₂), preferably 1 to 60 mass%, more preferably 10 to 50 mass%, and further preferably 20 mass% or more and less than 50 mass%. The content of zirconium (Zr) contained in the ceria-zirconia composite oxide is, in terms of oxide (ZrOz), preferably 30 to 90 mass%, more preferably 40 to 80 mass%, and further preferably more than 40 mass% and 70 mass% or less. When the first catalyst layer contains two or more kinds of ceria-zirconia composite oxides, the content of the ceria-zirconia composite oxide means the total amount. The ceria-zirconia composite oxide may further contain at least one selected from a group consisting of lanthanum (La), yttrium (Y), neodymium (Nd), and praseodymium (Pr), in addition to cerium and zirconium. In this case, the amount of lanthanum (La), yttrium (Y), neodymium (Nd), and praseodymium (Pr) can be properly selected from a viewpoint of stability of oxidation/reduction reaction and the like.

Crystal structures of the ceria-zirconia composite oxide (oxygen storage material) include a cubic crystal, a tetragonal crystal, a monoclinic crystal, and an orthorhombic crystal, and preferred is a cubic crystal, a tetragonal crystal, or a monoclinic crystal and more preferred is a cubic crystal or a tetragonal crystal.

### (Alumina)

The first catalyst layer preferably contains an alumina instead of the ceria-zirconia composite oxide or in addition to the ceria-zirconia composite oxide, and more preferably contains an alumina in addition to the ceria-zirconia composite oxide. Accordingly, rhodium (a catalyst component) can be supported on the alumina, and the contact area between rhodium and exhaust gas can be increased and a reactant can be adsorbed. As a result, the reactivity of the catalyst as a whole can be further increased.

Namely, in one embodiment of the invention, the first catalyst layer contains rhodium, and at least one of a ceria-zirconia composite oxide and an alumina. In one embodiment of the invention, the first catalyst layer contains rhodium, a ceria-zirconia composite oxide, and an alumina. In one embodiment of the invention, the first catalyst layer is composed of rhodium, a ceria-zirconia composite oxide, and an alumina.

When the first catalyst layer contains an alumina, the alumina used is not particularly restricted as long as it contains an oxide of aluminum, and examples thereof include an active alumina such as γ, δ, η, and θ-alumina, a lanthana-containing alumina, a silica-containing alumina, a silica-titania-containing alumina, and a silica-titania-zirconia-containing alumina. Among these aluminas, only one type may be used alone, or two or more types may be used in combination. Among these, γ, δ, or θ-alumina, or a lanthana-containing alumina is preferable from a viewpoint of high dispersion of precious metals. In the case of the lanthana-containing alumina, the content of lanthana in the lanthana-containing alumina is preferably 0.5 to 8 mass% and more preferably 1 to 5 mass%. In the present specification, X-containing alumina means that it contains aluminum at a rate (molar rate in terms of metal) of more than a half of the whole and contains X component at a rate of the rest. For example, in the lanthana-containing alumina, a rate of molar of aluminum (Al) relative to the total molar of lanthanum (La) and aluminum (Al) constituting the lanthana-containing alumina [=Al/(La+Al)] exceeds 0.5.

The pore volume distribution of the alumina used in the first catalyst layer is not particularly restricted, and an alumina having a pore structure different from a large pore-volume alumina described later is preferred. In the alumina used in the first catalyst layer, the pore volume of pores having a pore size of 2 nm or more and 40 nm or less is preferably less than 0.98 mL/g, more preferably 0.70 mL/g or less, and particularly preferably less than 0.60 mL/g in a pore volume distribution measured by nitrogen adsorption method. By using an alumina having such a pore volume, exhaust gas that has flowed into and diffused through the second catalyst layer can effectively undergo a purification reaction in the second catalyst layer. In the alumina used in the first catalyst layer, the lower limit of the pore volume of pores having a pore size of 2 nm or more and 40 nm or less is not particularly restricted, and is, for example, 0.01 mL/g or more and preferably more than 0.1 mL/g.

The total pore volume of the alumina is, for example, 0.2 to 1.0 mL/g and preferably 0.4 to 0.8 mL/g. By using alumina having such a pore volume, exhaust gas that has flowed into and diffused through the second catalyst layer can effectively undergo a purification reaction in the second catalyst layer.

The BET specific surface area of the alumina is also not particularly restricted, and from a viewpoint of supporting a catalyst component, it is preferably 50 to 350 m²/g, more preferably 80 to 200 m²/g, and particularly preferably 100 to 180 m²/g. With such a specific surface area, a sufficient amount of precious metal (a catalyst component) can be supported on the alumina, and the contact area between the catalyst component and exhaust gas can be increased and a reactant can be adsorbed. As a result, the reactivity of the catalyst as a whole can be further increased.

The shape of the alumina is not particularly restricted, and may be any shape such as a particle shape, a fine particle shape, a powder shape, a cylindrical shape, a conical shape, a prismatic shape, a cubic shape, a pyramidal shape, or an amorphous shape, and is preferably a particle shape, a fine particle shape, or a powder shape and more preferably a powder shape. When the alumina is a particle shape, a fine particle shape, or a powder shape, the average primary particle size of the alumina (in the first catalyst layer) is preferably 5 to 20 nm and more preferably 5 to 10 nm. Within those ranges, a catalyst component can be efficiently supported on the surface of the alumina. In the present specification, the average primary particle sizes of the alumina (including a large pore-volume alumina described below), the ceria-zirconia composite oxide, and the refractory inorganic oxide can be measured with a transmission electron microscope (TEM). In the present specification, the "primary particle size" means the largest distance among distances between any two points on an outline of the sample having a particle shape, a fine particle shape, or a powder shape. The average secondary particle size of the alumina (before milling) is preferably 20 to 150 µm and more preferably 30 to 90 µm. Within those ranges, a catalyst component can be efficiently supported on the surface of the alumina. In the present specification, the average secondary particle sizes of the alumina (including a large pore-volume alumina described below), the ceria-zirconia composite oxide, and the refractory inorganic oxide can be measured with a laser diffraction/scattering particle size analyzer.

The content (supported amount) of the alumina in the first catalyst layer is not particularly restricted and is preferably 10 to 300 g and more preferably 50 to 200 g per 1 L of the three-dimensional structure. When the content of the alumina per 1 L of the three-dimensional structure is 10 g or more, rhodium can be sufficiently dispersed in the alumina and a catalyst having a more sufficient durability can be obtained. Meanwhile, when the content of the alumina is 300 g or less, a contact state between rhodium and exhaust gas becomes favorable, and exhaust gas purification performance can be more sufficiently exhibited. When the first catalyst layer contains two or more kinds of alumina, the content of the alumina means the total content.

When the first catalyst layer contains alumina and ceria-zirconia composite oxide, the mixing ratio (mass ratio) of the alumina and the ceria-zirconia composite oxide is preferably 10:1 to 1:10, more preferably 10:2 to 5:10, and most preferably 10:3 to 10:10. With such a ratio, a sufficient amount of rhodium (a catalyst component) can be supported on the alumina, and the contact area between the catalyst component and exhaust gas can be increased and the ceria-zirconia composite oxide can sufficiently adsorb hydrocarbons (HC), carbon monoxide (CO), and nitrogen oxides (NOx) in the exhaust gas. As a result, the reactivity of the catalyst as a whole can be further increased and exhaust gas purification performance can be further improved.

### (Refractory Inorganic Oxide)

The first catalyst layer may further contain a refractory inorganic oxide (other refractory inorganic oxide) other than the alumina and the ceria-zirconia composite oxide. The refractory inorganic oxide has a large specific surface area, and by having it support the catalyst component, the contact area between the catalyst component and exhaust gas can be increased and a reactant can be adsorbed. As a result, the reactivity of the catalyst as a whole can be further increased.

Examples of the refractory inorganic oxide include zeolite, titania, zirconia, and silica. Among these refractory inorganic oxides, only one type may be used alone, or two or more types may be used in combination.

### [Second Catalyst Layer]

In the catalyst for exhaust gas purification according to the invention, the second catalyst layer (an upper layer on the side to be brought into contact with exhaust gas) is formed onto the first catalyst layer formed onto the three-dimensional structure. Here, the second catalyst layer may be directly arranged on the first catalyst layer or may be arranged above the first catalyst layer via another layer. Preferably, the second catalyst layer is directly arranged on the first catalyst layer. Another layer may be arranged on the second catalyst layer, but the second catalyst layer is preferably the outermost layer (to contact with the exhaust gas).

### (Precious Metal)

The second catalyst layer contains palladium (Pd). The second catalyst layer may contain platinum (Pt) as a precious metal in addition to palladium, but it is preferred that the precious metal contained in the second catalyst layer is only palladium.

The used amount (supported amount) of palladium (Pd) is not particularly restricted, and considering purification performance of exhaust gas (especially HC), it is preferably 0.01 to 20 g, more preferably 0.1 to 15 g, and most preferably 1 to 7 g in terms of the precious metal per 1 liter of the three-dimensional structure.

The used amount (supported amount) of platinum (Pt) when the second catalyst layer further contains platinum is not particularly restricted, and considering purification performance of exhaust gas, is, for example, 0.1 to 15 g and preferably 1 to 6 g in terms of the precious metal per 1 liter of the three-dimensional structure. In this case, the mixing ratio of palladium and platinum (palladium: platinum (mass ratio)) is, for example, 0.1:1 to 10:1 and preferably 0.5:1 to 5:1. As the range of the mixing ratio of palladium and platinum approaches the above-described preferable ranges, the exhaust gas purification efficiency can be improved.

As a raw material of the precious metal (palladium and platinum), a nitrate, an acetate, an amine salt, or an ammonium salt can be used, and a nitrate is more preferred.

The amount of the precious metal source (palladium source and platinum source) is not particularly restricted, and is preferably an amount that meets the above-described content (supported amount) of each of the precious metals. When two or more precious metal sources are used in combination, the total amount of the precious metal sources is preferably an amount that meets the above-described content (supported amount) of the precious metal.

### (Alumina)

The second catalyst layer contains an alumina. Accordingly, palladium (a catalyst component) can be supported on the alumina, and the contact area between palladium and exhaust gas can be increased and a reactant can be adsorbed. As a result, the reactivity of the catalyst as a whole can be further increased.

The alumina usable in the second catalyst layer is not particularly restricted as long as it contains an oxide of aluminum, and examples thereof include an active alumina such as γ, δ, η, and θ-alumina, a lanthana-containing alumina, a silica-containing alumina, a silica-titania-containing alumina, and a silica-titania-zirconia-containing alumina. Among these aluminas, only one type may be used alone, or two or more types may be used in combination. Among these, γ, δ, or θ-alumina, or a lanthana-containing alumina is preferable from viewpoints of high-temperature durability and a high specific surface area. In the case of the lanthana-containing alumina, the content of lanthana in the lanthana-containing alumina is preferably 0.5 to 8 mass% and more preferably 1 to 5 mass%. In the present specification, X-containing alumina means that it contains aluminum at a rate (molar rate in terms of metal) of more than a half of the whole and contains X component at a rate of the rest. For example, in the lanthana-containing alumina, a rate of molar of aluminum (Al) relative to the total molar of lanthanum (La) and aluminum (Al) constituting the lanthana-containing alumina [=Al/(La+Al)] exceeds 0.5.

The pore volume distribution of the alumina is not particularly restricted and the alumina preferably contains a large pore-volume alumina in which the pore volume of pores having a pore size of 2 nm or more and 40 nm or less is 0.60 mL/g or more in a pore volume distribution measured by nitrogen adsorption method, more preferably contains a large pore-volume alumina in which it is more than 0.70 mL/g, further preferably contains a large pore-volume alumina in which it is more than 0.8 mL/g, and particularly preferably contains a large pore-volume alumina in which it is 0.98 mL/g or more. By using a large pore-volume alumina, V₂₋₄₀ₙₘ of the catalyst can be more easily achieved. Therefore, the catalytic performance can be further improved. In the large pore-volume alumina, the upper limit of the pore volume of pores having a pore size of 2 nm or more and 40 nm or less is, for example, 5 mL/g or less, preferably less than 2.1 mL/g, and more preferably less than 1.5 mL/g. It is particularly preferred to arrange the large pore-volume alumina in the second catalyst layer, and arrange an alumina having a small pore volume of pores having a pore size of 2 nm or more and 40 nm or less (preferably V₂₋₄₀ₙₘ = 0.70 mL/g or less and particularly preferably V₂₋₄₀ₙₘ = less than 0.60 mL/g) in the first catalyst layer. According to the embodiment, the retention of exhaust gas in the pores (thus the contact between exhaust gas and palladium) is promoted in the second catalyst layer and the exhaust gas (especially hydrocarbons in the exhaust gas) can be more efficiently purified. At the same time, NO and CO that have not been completely purified in the second catalyst layer are dispersed into the first catalyst layer (the lower layer on the three-dimensional structure side) and purified via NO-CO reaction by rhodium. Therefore, the catalyst according to the embodiment efficiently purifies hydrocarbons (HC), carbon monoxide (CO), and nitrogen oxides (NOx) in exhaust gas and is especially suitable as a three-way catalyst. As the large pore-volume alumina, the pore volume (V₂₋₄₀ₙₘ) of pores having a pore size of 2 nm or more and 40 nm or less may be measured in a commercially available alumina and one having a desired pore volume may be selected. Alternatively, the large pore-volume alumina may be produced by an alkoxide hydrolysis method.

The total pore volume of the large pore-volume alumina is, for example, 0.6 to 2.1 mL/g and preferably 0.8 to 1.6 mL/g. By using alumina having such a pore volume, exhaust gas that has flowed into and diffused through the second catalyst layer can effectively undergo a purification reaction in the second catalyst layer.

In the present specification, alumina in which the pore volume of pores having a pore size of 2 nm or more and 40 nm or less is 0.60 mL/g or more in a pore volume distribution measured by nitrogen adsorption method will also be referred to simply as a "large pore-volume alumina".

When the second catalyst layer contains the large pore-volume alumina, the proportion of the large pore-volume alumina in the whole alumina in the second catalyst layer is preferably 50 mass% or more, more preferably more than 50 mass%, further preferably more than 80 mass% (upper limit: 100 mass%), and particularly preferably 100 mass%. Namely, in a preferred embodiment of the invention, the large pore-volume alumina is contained in the second catalyst layer in a proportion of 50 mass% or more relative to the total mass of the alumina. In a more preferred embodiment of the invention, the large pore-volume alumina is contained in the second catalyst layer in a proportion of more than 50 mass% relative to the total mass of the alumina. In a further preferred embodiment of the invention, the large pore-volume alumina is contained in the second catalyst layer in a proportion of more than 80 mass% relative to the total mass of the alumina. In a particularly preferred embodiment of the invention, the large pore-volume alumina is contained in the second catalyst layer in a proportion of 100 mass% relative to the total mass of the alumina (namely, the second catalyst layer contains as alumina only the large pore-volume alumina). By using the large pore-volume alumina in such an amount, V₂₋₄₀ₙₘ of the catalyst can be further increased and the catalytic performance can be further improved. The first catalyst layer may contain the large pore-volume alumina, but the proportion of the large pore-volume alumina in the whole alumina in the first catalyst layer is less than 50 mass%, preferably less than 10 mass%, more preferably less than 5 mass% (lower limit: 0 mass%), and particularly preferably 0 mass% (namely, the first catalyst layer contains no large pore-volume alumina).

When the second catalyst layer contains an alumina other than the large pore-volume alumina, alumina specified in the item (Alumina) for the first catalyst layer can be used.

When the second catalyst layer contains the large pore-volume alumina, the proportion of the large pore-volume alumina in the second catalyst layer is, relative to the total mass of the second catalyst layer, preferably more than 20 mass%, more preferably more than 40 mass% and 70 mass% or less, further preferably 45 mass% or more and less than 60 mass%, and particularly preferably more than 48.0 mass% and less than 55.0 mass%. By using the large pore-volume alumina in such a proportion, V₂₋₄₀ₙₘ of the catalyst can be increased. Namely, in a preferred embodiment of the invention, the large pore-volume alumina is contained in a proportion of more than 20 mass% relative to the total mass of the second catalyst layer. In a more preferred embodiment of the invention, the large pore-volume alumina is contained in a proportion of more than 40 mass% and 70 mass% or less relative to the total mass of the second catalyst layer. In a further preferred embodiment of the invention, the large pore-volume alumina is contained in a proportion of 45 mass% or more and less than 60 mass% relative to the total mass of the second catalyst layer. In a particularly preferred embodiment of the invention, the large pore-volume alumina is contained in a proportion of more than 48.0 mass% and less than 55.0 mass% relative to the total mass of the second catalyst layer.

The BET specific surface area of the large pore-volume alumina is also not particularly restricted, and from a viewpoint of supporting catalyst components, it is preferably 80 to 450 m²/g, more preferably 100 to 250 m²/g, and particularly preferably 120 to 200 m²/g. With such a specific surface area, a sufficient amount of precious metal (a catalyst component) can be supported on the large pore-volume alumina, and the contact area between the catalyst component and exhaust gas can be increased and a reactant can be adsorbed. As a result, the reactivity of the catalyst as a whole can be further increased.

The shape of the large pore-volume alumina is not particularly restricted, and may be any shape such as a particle shape, a fine particle shape, a powder shape, a cylindrical shape, a conical shape, a prismatic shape, a cubic shape, a pyramidal shape, or an amorphous shape, and is preferably a particle shape, a fine particle shape, or a powder shape and more preferably a powder shape. When the large pore-volume alumina is a particle shape, a fine particle shape, or a powder shape, the average primary particle size of the large pore-volume alumina is preferably 5 to 20 nm and more preferably 5 to 10 nm. Within those ranges, the catalyst component can be efficiently supported on the surface of the large pore-volume alumina. The average secondary particle size of the large pore-volume alumina (before milling) is preferably 10 to 90 µm and more preferably 20 to 50 µm. Within those ranges, a catalyst component can be efficiently supported on the surface of the alumina.

A content (supported amount) of the large pore-volume alumina is not particularly restricted and is preferably 10 to 300 g, more preferably 20 to 200 g, and particularly preferably 30 to 100 g per 1 L of the three-dimensional structure. When the content of the large pore-volume alumina per 1 L of the three-dimensional structure is 10 g or more, palladium can be sufficiently dispersed in the large pore-volume alumina and a catalyst having a more sufficient durability can be obtained. Meanwhile, when the content of the large pore-volume alumina is 300 g or less, a contact state between palladium and exhaust gas becomes favorable, and exhaust gas purification performance can be more sufficiently exhibited. When the second catalyst layer contains two or more kinds of large pore-volume alumina, the content of the large pore-volume alumina means the total content.

### (Strontium)

The second catalyst layer contains strontium in addition to palladium and the alumina. Since the second catalyst layer is arranged on the side to be brought into contact with exhaust gas, it is exposed to a higher temperature than the first catalyst layer. Meanwhile, the alumina, especially the large pore-volume alumina, easily contracts due to heat, and the pore volume (V₂₋₄₀ₙₘ) of pores having a pore size of 2 nm or more and 40 nm or less of the catalyst decreases during the exposure to exhaust gas. However, the second catalyst layer according to the present invention contains strontium. Strontium gets into the structure of the alumina and suppresses an aggregation of alumina with each other. Thus, both the alumina, especially the large pore-volume alumina and strontium are contained, and thereby the thermal contraction of the alumina can be suppressed and V₂₋₄₀ₙₘ can be maintained.

Strontium present in the second catalyst layer exists in the form of an oxide, a sulfate, or a carbonate. Preferably, strontium exists in a form of an oxide or a carbonate. Namely, the second catalyst layer contains palladium, an oxide, a sulfate, or a carbonate of strontium, and the alumina. In a preferred form of the invention, the second catalyst layer contains palladium, an oxide or a carbonate of strontium, and the alumina (especially the large pore-volume alumina).

The used amount (supported amount) of strontium per 1 liter of the three-dimensional structure is more than 0 g/L and less than 15 g/L, preferably 2.5 g/L or more and 10.0 g/L or less, and most preferably 4.0 g/L or more and 7.5 g/L or less in terms of the oxide (SrO). Here, when strontium is not used (the used amount of Sr = 0 g/L), the thermal contraction of the alumina (especially the large pore-volume alumina) cannot be suppressed and the catalytic performance is poor. Meanwhile, when the used amount of strontium is 15 g/L or more, strontium closes the pores or decreases the pore size, and thus the catalytic performance may be poor.

The mixing ratio of strontium (Sr) and palladium in the second catalyst layer is a ratio such that strontium (Sr) (in terms of strontium oxide) is preferably 0.1 to 5.0, more preferably 0.5 to 3.5, and particularly preferably more than 0.7 and less than 2.5 per 1 mol of palladium (Pd). As the mixing ratio of strontium (Sr) and palladium in the second catalyst layer, a value obtained by dividing the used amount (mol) of strontium (in terms of strontium oxide) in the second catalyst layer by the used amount (mol) of palladium in the second catalyst layer to the second decimal place and rounding off to the first decimal place is used.

Regarding the mixing ratio of strontium and the large pore-volume alumina in the second catalyst layer when the second catalyst layer contains the large pore-volume alumina, the molar ratio of strontium (in terms of strontium oxide) relative to the large pore-volume alumina (mol of strontium (in terms of strontium oxide) / 1 mol of large pore-volume alumina) is preferably 0.01 or more and less than 0.8, more preferably 0.03 or more and less than 0.50, and particularly preferably 0.05 or more and 0.35 or less. With such the mixing ratio, the thermal contraction of the large pore-volume alumina can be more effectively suppressed and prevented. As the mixing ratio of strontium and the large pore-volume alumina in the second catalyst layer, a value obtained by dividing the used amount (mol) of strontium (in terms of strontium oxide) in the second catalyst layer by the used amount (mol) of the large pore-volume alumina in the second catalyst layer to the third decimal place and rounding off to the second decimal place is used.

When the second catalyst layer contains the large pore-volume alumina, the product of the proportion of the large pore-volume alumina in the whole alumina in the second catalyst layer and the molar ratio of strontium (in terms of strontium oxide) relative to the large pore-volume alumina [= (proportion (%) of the large pore-volume alumina in the whole alumina in the second catalyst layer) × (molar rate of strontium (in terms of strontium oxide) relative to the large pore-volume alumina] ("alumina 2 value" in Examples below) is preferably more than 0 and 32 or less, more preferably 5.0 to 22.0, and particularly preferably 12.0 to 16.5. With such a proportion, the thermal contraction of the large pore-volume alumina can be more effectively suppressed and prevented.

As a raw material of strontium (strontium source), strontium hydroxide (Sr(OH)₂), strontium sulfate (SrSO₄), strontium carbonate (SrCO₃), strontium acetate (Sr(CH₃COO)₂), and the like can be used, strontium hydroxide and strontium sulfate are preferred, and strontium hydroxide is more preferred.

The amount of the strontium source is not particularly restricted, and is preferably an amount that meets the above-described content (supported amount) of strontium. When two or more strontium sources are used in combination, the total amount of the strontium sources is preferably an amount that meets the above-described content (supported amount) of strontium.

From viewpoints of heat resistance and the pore maintenance rate of the large pore-volume alumina, the second catalyst layer preferably contains no Group 2 element other than strontium (namely, beryllium (Be), magnesium (Mg), calcium (Ca), barium (Ba), and radium (Ra)). It is considered that since strontium has a lower basicity than barium, it does not damage the structure of the alumina and it can easily stabilize the structure. Specifically, the content of Group 2 elements per 1 liter of the three-dimensional structure other than strontium in the second catalyst layer is less than 0.1 g/L. Preferably, the content of Group 2 elements per 1 liter of the three-dimensional structure other than strontium in the second catalyst layer is less than 0.05 g/L (lower limit: 0 g/L). Particularly preferably, the content of Group 2 elements per 1 liter of the three-dimensional structure other than strontium in the second catalyst layer is 0 g/L (the second catalyst layer contains only strontium as a Group 2 element). The presence of Group 2 elements other than strontium in the second catalyst layer can be confirmed by a known method such as an X-ray fluorescence analysis.

### (Ceria-Zirconia Composite Oxide)

It is preferred that the second catalyst layer contains a ceria-zirconia composite oxide and it is more preferred that both the first and the second catalyst layers contain a ceria-zirconia composite oxide. Namely, in one preferred embodiment of the invention, the first catalyst layer and the second catalyst layer contain a ceria-zirconia composite oxide.

Namely, in one embodiment of the invention, the second catalyst layer contains palladium, strontium, and an alumina, and the alumina contains a large pore-volume alumina. In one embodiment of the invention, the second catalyst layer contains palladium, strontium, an alumina, and a ceria-zirconia composite oxide, and the alumina contains a large pore-volume alumina. In one embodiment of the invention, the second catalyst layer is composed of palladium, strontium, a large pore-volume alumina, and a ceria-zirconia composite oxide.

In one embodiment of the invention, the first catalyst layer contains rhodium, and at least one of a ceria-zirconia composite oxide and an alumina; and the second catalyst layer contains palladium, strontium, and an alumina, and the alumina in the second catalyst layer contains a large pore-volume alumina in a proportion of 50 mass% or more relative to the total mass of the alumina in the second catalyst layer. In one embodiment of the invention, the first catalyst layer contains rhodium, a ceria-zirconia composite oxide, and an alumina; and the second catalyst layer contains palladium, strontium, an alumina, and a ceria-zirconia composite oxide, and the alumina in the second catalyst layer contains a large pore-volume alumina in a proportion of more than 80 mass% relative to the total mass of the alumina in the second catalyst layer. In one embodiment of the invention, the first catalyst layer is composed of rhodium, a ceria-zirconia composite oxide, and an alumina; and the second catalyst layer is composed of palladium, strontium, a large pore-volume alumina, and a ceria-zirconia composite oxide.

When the second catalyst layer contains a ceria-zirconia composite oxide, the ceria-zirconia composite oxide (CeO₂-ZrO₂) acts as an oxygen storage material. The oxygen storage material (also referred to as an "oxygen storage/release material") has a function of allowing oxidation/reduction reactions to proceed stably by storing oxygen in an oxidizing atmosphere (lean) and releasing oxygen in a reducing atmosphere (rich) in accordance with fluctuations in an air-fuel ratio (A/F) which changes depending on the operating conditions.

The ceria-zirconia composite oxide used in the second catalyst layer has the same features as that in the first catalyst layer unless otherwise specified, and thus the description is omitted here.

The content (supported amount; in terms of oxide) of the ceria-zirconia composite oxide in the second catalyst layer is not particularly restricted and is preferably 5 to 200 g, more preferably 5 to 100 g, and further preferably 10 to 90 g per 1 liter of the three-dimensional structure. When the second catalyst layer contains two or more kinds of ceria-zirconia composite oxides, the content of the ceria-zirconia composite oxide means the total content. The same ceria-zirconia composite oxide, as in the first catalyst layer can be used.

When the second catalyst layer contains alumina and ceria-zirconia composite oxide, the mixing ratio (mass ratio) of the alumina and the ceria-zirconia composite oxide is preferably 10:1 to 1:10, more preferably 10:2 to 5:10, and most preferably 10:3 to 10:10. With such a ratio, a sufficient amount of palladium (a catalyst component) can be supported on the alumina, and the contact area between the catalyst component and exhaust gas can be increased and the ceria-zirconia composite oxide can sufficiently adsorb hydrocarbons (HC), carbon monoxide (CO), and nitrogen oxides (NOx) in the exhaust gas. As a result, the reactivity of the catalyst as a whole can be further increased and exhaust gas purification performance can be further improved.

### (Refractory Inorganic Oxide)

The second catalyst layer may further contain a refractory inorganic oxide (other refractory inorganic oxide) other than the alumina (especially a large pore-volume alumina) and the ceria-zirconia composite oxide. The refractory inorganic oxide has a large specific surface area, and by having it support the catalyst component, the contact area between the catalyst component and exhaust gas can be increased and a reactant can be adsorbed. As a result, the reactivity of the catalyst as a whole can be further increased. When the second catalyst layer contains another refractory inorganic oxide, the same refractory inorganic oxide as in the first catalyst layer can be used.

### [Three-Dimensional Structure]

In the catalyst of the invention, the first and the second catalyst layers are laminated (supported) onto a three-dimensional structure.

The three-dimensional structure is not particularly restricted and a refractory three-dimensional structure normally used in the field can be used in the same manner. As the three-dimensional structure, for example, a heat-resistant carrier such as a honeycomb carrier having through holes (gas passage holes, cell shape) with a triangular shape, a quadrangular shape, or a hexagonal shape can be used. As the three-dimensional structure, an integrally molded one (a three-dimensional integral structure or a monolithic structure) is preferred and, for example, a monolith carrier, a metal honeycomb carrier, a punching metal, or the like is preferably used.

The monolith carrier may be generally referred to as ceramic honeycomb carrier, preferably one containing in particular cordierite, mullite, silicon carbide, silicon nitride, or the like as a material, and among them, particularly preferably one made of cordierite (cordierite carrier). Other than the above, ones obtained by forming an integral structure using heat-resistant metals with oxidization resistance such as stainless steel and Fe-Cr-Al alloy are also used.

These monolith carriers are produced by an extrusion molding method, a method of winding and hardening a sheet-shaped element, or the like. The shape of the through holes (gas passage holes, cell shape) may be any of a hexagonal shape (honeycomb), a quadrangular shape, a triangular shape, and a corrugate (corrugation shape). The cell density (number of cells/unit cross-sectional area) of 100 to 1200 cells/square inch is sufficient for use, and it is preferably 200 to 1000 cells/square inch and more preferably 300 to 900 cells/square inch (1 inch = 25.4 mm).

### <Method for Producing Exhaust Gas Purification Catalyst>

The catalyst for exhaust gas purification of the invention can be produced with reference to known methods appropriately, and as described above, the pore volume (V₂₋₄₀ₙₘ) of pores having a pore size of 2 nm or more and 40 nm or less can be achieved by forming the first catalyst layer using rhodium and forming the second catalyst layer using palladium, strontium, and the alumina (especially the large pore-volume alumina).

Hereinafter, a preferred form of the invention includes a forming step (A) of the first catalyst layer including (a-1) a slurry preparing step, (a-2) a slurry applying step, (a-3) a drying step, and (a-4) a calcination step; and a forming step (B) of the second catalyst layer including (b-1) a slurry preparing step, (b-2) a slurry applying step, (b-3) a drying step, and (b-4) a calcination step.

### [Forming Step (A) of First Catalyst Layer]

### (a-1) Slurry Preparing Step

The rhodium raw material and , if necessary, each of the raw materials described in the above [First Catalyst Layer], are dispersed in an aqueous medium (for example, water), followed by wet milling to prepare slurry. Here, the wet milling can be performed by a known method using, for example, a ball mill. The wet milling conditions are not particularly restricted and a normal condition can be appropriately selected. For example, it is preferred to perform the wet milling with a ball mill, for example, at a rotation speed of 50 to 5000 rotations/min for 5 minutes to 5 hours.

### (a-2) Slurry Applying Step

In the present step, the slurry obtained in the (a-1) slurry preparing step is applied on the three-dimensional structure. As a method of applying the slurry on the three-dimensional structure, a known method such as washcoating can be appropriately adopted. Further, the application amount of the slurry can be appropriately set by those skilled in the art according to the amount of solid matter in the slurry and the thickness of the catalyst layer to be formed. The application amount of the slurry is preferably an amount that meets the above-described contents (supported amounts) of rhodium, alumina, and ceria-zirconia composite oxide, and other optional additives (if contained).

### (a-3) Drying Step

The drying step is a step of drying the slurry that has been applied onto the three-dimensional structure in the slurry applying step to form a film.

In the drying step, a film (slurry film) applied to the three-dimensional structure is dried in air at a temperature of preferably 50 to 170°C and more preferably 70 to 150°C for 5 minutes to 10 hours and preferably 15 minutes to 3 hours.

### (a-4) Calcination Step

In the present step, the film is calcined after (a-3). Thereby the catalyst components (such as rhodium, the alumina, and the ceria-zirconia composite oxide) attach to the three-dimensional structure. Additionally, nitrogen-containing components, hydrogen-containing components, and carbon-containing components remaining in the catalyst layer are removed.

Here, the calcination conditions are not particularly restricted. For example, calcination is performed in air at a temperature of 440°C to 800°C, preferably 480°C to 700°C, and more preferably 500°C to 600°C for 10 minutes to 3 hours and preferably 15 minutes to 1 hour. In such conditions, the catalyst components (such as rhodium, alumina, and ceria-zirconia composite oxide) can efficiently adhere to the three-dimensional structure.

The calcination may be performed while flowing gas such as air. In this case, a speed of gas flow (gas flow rate) is not particularly restricted, and is preferably 0.1 m/second or more and more preferably 0.2 to 1.2 m/second.

The first catalyst layer is formed on the three-dimensional structure as described above.

### [Forming Step (B) of Second Catalyst Layer]

### (b-1) Slurry Preparing Step

The palladium raw material, a strontium raw material, and the alumina, and each of the raw materials described in the above [Second Catalyst Layer] if necessary, are dispersed in an aqueous medium (for example, water), followed by wet milling to prepare slurry. Here, the wet milling can be performed by a known method using, for example, a ball mill. A wet milling condition is not particularly restricted and in a case of a slurry containing the large pore-volume alumina, a solid content particle size in the slurry after milling is preferably 2 µm to 10 µm and more preferably 3 µm to 8 µm. When it is 3 µmm or more, pores of 2 nm or more and 40 nm or less can be present in a predetermined proportion. When it is 8 µm or less, an adhesion strength to the three-dimensional structure can be improved. The solid content particle size in the slurry after milling can be measured with a laser diffraction/scattering particle size analyzer. In order to prepare slurry having such the solid content particle size, it is preferred to perform a wet milling with a ball mill, for example, at a rotation speed of 50 to 5000 rotations/min for 5 minutes to 5 hours.

### (b-2) Slurry Applying Step

In the present step, the slurry obtained in the (b-1) slurry preparing step is applied on the first catalyst layer on the three-dimensional structure. Specific method is the same as the (a-2) slurry applying step.

### (b-3) Drying Step

The drying step is a step of drying the slurry that has been applied in the slurry applying step on the first catalyst layer on the three-dimensional structure to form a film. Specific method is the same as the (a-3) drying step.

### (b-4) Calcination Step

In the present step, the film is calcined after the (b-3). Thereby the catalyst components (such as palladium, strontium, the alumina, and the ceria-zirconia composite oxide) attach to the three-dimensional structure. Additionally, a nitrogen-containing component, a hydrogen-containing component, and a carbon-containing component remaining in the catalyst layer are removed. Specific method is the same as the (a-4) calcination step.

As described above, the second catalyst layer is formed on the first catalyst layer on the three-dimensional structure to produce the catalyst according to the invention.

### <Method for Purifying Exhaust Gas>

The catalyst of the invention can exhibit a high purification performance for exhaust gas (hydrocarbons (HC), carbon monoxide (CO), and nitrogen oxides (NOx)) emitted from a gasoline engine. Therefore, the invention also provides a method for purifying exhaust gas of a gasoline engine, including treating exhaust gas emitted from a gasoline engine (especially purifying hydrocarbons (HC), carbon monoxide (CO), and nitrogen oxides (NOx) in exhaust gas) using the catalyst for exhaust gas purification of the invention (the second aspect of the invention). The purification rate (purification performance) of exhaust gas using a gasoline engine can be evaluated, for example, by the temperature (T50 (°C)) at which the purification rates of CO, HC, and NOx each reach 50% in the light-off (LO) test below. It is indicated that the lower T50 is, the higher the exhaust gas purification performance (catalytic performance) exhibited by the catalyst.

Exhaust gas normally contains HC, CO, and NOx, and contains, for example, nitrogen oxides (e.g., NO, NO₂, and N₂O), carbon monoxide (CO), carbon dioxide (CO₂), oxygen (O₂), hydrogen (H₂), ammonia (NH₃), water (H₂O), sulfur dioxide (SO₂), hydrocarbons (HC), and the like in any proportion.

The gasoline engine to which the exhaust gas purification method of the present form is applied is intended to exclude diesel engines, and includes, in addition to normal gasoline engines, for example, gasoline hybrid engines, engines that use natural gas, ethanol, or dimethyl ether as fuel, and the like. Among these, it is preferred to be a gasoline engine or a gasoline hybrid engine.

Examples of a method for bringing exhaust gas into contact with the catalyst of the invention include a method of placing the catalyst for exhaust gas purification in the exhaust flow path of an exhaust port of a gasoline engine and having exhaust gas flow into the exhaust flow path.

The temperature of the exhaust gas is preferably 0°C to 800°C, namely, within the temperature range of exhaust gas during normal gasoline engine operation. The air-fuel ratio (A/F) in the exhaust gas of a gasoline engine, having a temperature of 0°C to 800°C, is 10 to 30 and preferably 11 to 14.7. Alternatively, as another preferred form, the temperature of exhaust gas may be in a high temperature range of 800 to 1200°C. The air-fuel ratio of the exhaust gas of an internal combustion engine, having a temperature of 800 to 1200°C, is preferably 10 to 18.6.

The catalyst according to the invention can exhibit an excellent exhaust gas treatment effect also for exhaust gas (especially containing HC, CO, NOx, water vapor, and the like) having a low temperature of 50 to 600°C, or also for exhaust gas having a low temperature of 50 to 600°C after being exposed for a long period to exhaust gas (especially containing HC, CO, NOx, water vapor, and the like) having a high temperature of 650 to 900°C at the catalyst bed part.

Therefore, the catalyst of the invention described above or the catalyst produced by the method described above may be exposed to exhaust gas having a temperature of 650 to 900°C and preferably 700°C to 850°C. The period for which the catalyst of the invention is exposed to high temperature exhaust gas (period for which exhaust gas flows) is also not particularly restricted, and is, for example, 10 to 800 hours, preferably 16 to 500 hours, and more preferably 40 to 100 hours. The catalyst of the invention has a high performance even after having been exposed to such a high temperature exhaust gas. In order to examine exhaust gas purification performance of the catalyst after being exposed to high temperature exhaust gas, it is effective to evaluate the exhaust gas purification performance (resistance to a deterioration of the catalyst) after the catalyst is subjected to a thermal aging treatment of exposure to exhaust gas of, for example, 650 to 1000°C and preferably 650 to 900°C for 10 to 300 hours.

In the present specification, " exhaust gas temperature" means the temperature of the exhaust gas at a catalyst inlet part. The "catalyst inlet part" indicates the part of a catalyst end face on the exhaust gas inlet side to 10 cm toward the internal combustion engine side in an exhaust pipe in which the catalyst for exhaust gas purification is placed, and indicates the part at the center portion in the longitudinal direction (axial direction) of the exhaust pipe. In the present specification, the "catalyst bed part" indicates a central portion between the catalyst end face on the exhaust gas inlet side and the catalyst end face on an exhaust gas outlet side in the exhaust pipe, and the part at the center portion in a cross-section of the exhaust pipe (when the cross-section of the exhaust pipe is not a round shape, the part at the center of gravity portion in the cross-section of the exhaust pipe).

Although embodiments of the invention have been described in detail, these are illustrative and exemplary and not restrictive, and it is obvious that the scope of the invention is to be interpreted by the appended claims.

The invention includes the following embodiments and forms.

1. A catalyst for exhaust gas purification, containing a first catalyst layer and a second catalyst layer sequentially laminated onto a three-dimensional structure, in which
   the first catalyst layer contains rhodium,
   the second catalyst layer contains palladium, strontium, and an alumina, and the strontium content in the second catalyst layer (in terms of strontium oxide) per 1 liter of the three-dimensional structure is more than 0 g/L and less than 15 g/L, and
   the catalyst for exhaust gas purification has a pore volume of pores having a pore size of 2 nm or more and 40 nm or less of more than 0.26 mL/g in a pore volume distribution measured by nitrogen adsorption method.
2. The catalyst for exhaust gas purification according to the above 1., having a total pore volume of 0.45 mL/g or more.
3. The catalyst for exhaust gas purification according to the above 1. or 2., in which the alumina contains a large pore-volume alumina having a pore volume of pores having a pore size of 2 nm or more and 40 nm or less of 0.60 mL/g or more in a pore volume distribution measured by nitrogen adsorption method.
4. The catalyst for exhaust gas purification according to the above 3., in which the large pore-volume alumina is contained in the second catalyst layer in a proportion of 50 mass% or more relative to a total mass of the alumina.
5. The catalyst for exhaust gas purification according to the above 3. or 4., in which the large pore-volume alumina is contained in a proportion of more than 20 mass% relative to a total mass of the second catalyst layer.
6. The catalyst for exhaust gas purification according to any one of the above 3. to 5., in which a molar rate of the strontium (in terms of strontium oxide) relative to the large pore-volume alumina is 0.01 or more and less than 0.08.
7. The catalyst for exhaust gas purification according to any one of the above 1. to 6., in which the pore maintenance rate after a thermal aging is 42.0% or more and less than 80.0%.
8. The catalyst for exhaust gas purification according to any one of the above 1. to 7., in which a content of a Group 2 element other than the strontium in the second catalyst layer per 1 liter of the three-dimensional structure is less than 0.1 g/L.
9. The catalyst for exhaust gas purification according to any one of the above 1. to 8., in which the first catalyst layer and the second catalyst layer contain a ceria-zirconia composite oxide.
10. A method for purifying exhaust gas of a gasoline engine, including treating exhaust gas emitted from a gasoline engine using the catalyst for exhaust gas purification according to any one of the above 1. to 9.

### Examples

Effects of the invention are described using the following Examples and Comparative Examples. However, the technical scope of the invention is not only limited to the following Examples. In the following Examples, operations were performed at room temperature (25°C) unless otherwise specified. Unless otherwise specified, "%" and "part" mean "mass%" and "parts by mass", respectively.

### Example 1

Using rhodium nitrate aqueous solution as a Rh source, lanthanum-containing alumina (containing 1 mass% of La₂O₃; V₂₋₄₀ₙₘ = 0.55 mL/g, total pore volume = 0.58 mL/g, BET specific surface area = 155 m²/g, average secondary particle size = 65 µm) (alumina 1) as an alumina raw material, and a ceria-zirconia composite oxide (CeO₂:ZrO₂:La₂O₃ = 30:60:10 (mass ratio), BET specific surface area = 68 m²/g, average secondary particle size (D50) = 15 µm) (CZ1), each of the raw materials was weighed so that the mass ratio of Rh: CZ1: alumina 1 met the value in Table 1 after calcining the first catalyst layer. Each of the raw materials weighed was added to pure water and dispersed in the pure water. The dispersed liquid was stirred for 1 hour, followed by wet milling with a ball mill at a rotation speed of 200 rotations/min for 30 minutes to prepare slurry a1 (solid mass concentration = 40 mass%, pH=6).

Subsequently, as three-dimensional structure a cylindrical-shaped cordierite carrier (diameter = 110 mm, length = 97 mm, 750 cells/square inch, 3 mil) was washcoated with the slurry a1, so that the supported amount after calcination met the value of the first catalyst layer of catalyst A in Table 1. Subsequently, drying was performed at 150°C for 15 minutes and then calcination was performed in air at 550°C for 30 minutes to obtain a precursor A1 in which the first catalyst layer (lower catalyst layer) was formed on the cordierite carrier.

Aluminum isopropoxide was used as a raw material for alumina carrier preparation, and a liquid obtained by adding 200 ml of pure water to 100 ml of isopropyl alcohol and a liquid obtained by adding 100 ml of pure water to 200 ml of isopropyl alcohol were prepared as a decomposition solution. 100 g of powdered aluminum isopropoxide was placed in a 500 ml beaker, followed by performing hydrolysis using each of the two kinds of alcohol solutions having different concentrations. Vigorous stirring was performed at 43°C for 15 minutes, and the obtained hydrogel was vacuum dried at a normal temperature (25°C) and formed, followed by drying at 120°C for 2 hours and calcining at 550°C for 2 hours to obtain a precursor of alumina 2. Subsequently, the precursor of alumina 2 was added to a solution obtained by adding lanthanum nitrate to 500 ml of pure water, , followed by stirring with a mixer to obtain a suspended slurry. The obtained slurry was subjected to evaporation until dryness, and the obtained product was calcined at 600°C for 3 hours to obtain a large pore-volume alumina containing lanthanum (alumina 2). The alumina 2 obtained as described above contained 1 mass% of lanthanum as La₂O₃, and had V₂₋₄₀ₙₘ of 0.98 mL/g, total pore volume of 1.1 mL/g, BET specific surface area of 165 m²/g, and average secondary particle size of 37 µm.

Next, using palladium nitrate aqueous solution as a Pd source, a ceria-zirconia composite oxide (CeO₂:ZrO₂:La₂O₃ = 47:47:6 (mass ratio), BET specific surface area = 67 m²/g, average secondary particle size (D50) = 5.5 µm) (CZ2), strontium hydroxide octahydrate as a strontium source, and alumina 2 as an alumina raw material, each of the raw materials was weighed so that the mass ratio of Pd:CZ2:SrO:alumina 2 met the value in Table 1 after calcining the second catalyst layer. Each of the raw materials weighed was added to pure water and dispersed in the pure water. The dispersed liquid was stirred for 1 hour, followed by wet milling with a ball mill at a rotation speed of 200 rotations/min for 30 minutes to prepare slurry a2 (solid mass concentration = 40 mass%, pH=7).

Subsequently, the precursor A1 was washcoated with the slurry a2 so that the supported amount after calcination met the value of the second catalyst layer of the catalyst A in Table 1. Subsequently, drying was performed at 150°C for 15 minutes and then calcination was performed in air at 550°C for 30 minutes to form the second catalyst layer (upper catalyst layer) on the first catalyst layer (lower catalyst layer) of the precursor A1 (catalyst A).

### Example 2

Catalyst B was prepared in the same manner as in Example 1 except that the mass ratio of alumina 1 and alumina 2 in the second catalyst layer was changed to the values of catalyst B in Table 1 after calcining the second catalyst layer.

### Example 3

Catalyst C was prepared in the same manner as in Example 1 except that the content (supported amount) of SrO in the second catalyst layer was changed to the value of catalyst C in Table 1 after calcining the second catalyst layer.

### Example 4

Catalyst D was prepared in the same manner as in Example 1 except that the content (supported amount) of SrO in the second catalyst layer was changed to the value of catalyst D in Table 1 after calcining the second catalyst layer.

### Example 5

Catalyst E was prepared in the same manner as in Example 1 except that strontium sulfate (SrSO₄) was used as the strontium source in the second catalyst layer instead of strontium hydroxide and the content (supported amount) of SrSO₄ was changed to the value of catalyst E in Table 1 after calcining the second catalyst layer.

### Comparative Example 1

Catalyst F was prepared in the same manner as in Example 1 except for using alumina 1 instead of alumina 2 in the second catalyst layer.

### Comparative Example 2

Catalyst G was prepared in the same manner as in Example 1 except that the content (supported amount) of SrO in the second catalyst layer was changed to the value of catalyst G in Table 1 after calcining the second catalyst layer (that is, the second catalyst layer was formed without adding strontium hydroxide octahydrate).

### Comparative Example 3

Catalyst H was prepared in the same manner as in Example 1 except that the content (supported amount) of SrO in the second catalyst layer was changed to the value of catalyst H in Table 1 after calcining the second catalyst layer.

### Comparative Example 4

Catalyst I was prepared in the same manner as catalyst A except that barium sulfate (BaSO₄) was used instead of strontium hydroxide in the second catalyst layer and the content (supported amount) of BaSO₄ was changed to the value of catalyst I in Table 1 after calcining the second catalyst layer.

Namely, slurry a1 was prepared in the same manner as in Example 1. Subsequently, the precursor A1 was obtained in the same manner as in Example 1.

Using palladium nitrate aqueous solution, CZ2, barium sulfate (BaSO₄), and alumina 2, each of the raw materials was weighed so that the mass ratio of Pd:CZ2:BaSO₄:alumina 2 met the value in Table 1 after calcining the second catalyst layer. Each of the raw materials weighed was added to pure water and dispersed in the pure water. The dispersed liquid was stirred for 1 hour, followed by wet milling with a ball mill at a rotation speed of 200 rotations/min for 30 minutes to prepare slurry I2 (solid mass concentration = 40 mass%, pH=7).

Subsequently, the precursor A1 was washcoated with slurry I2 so that the supported amount after calcination met the value of the second catalyst layer of the catalyst I in Table 1. Subsequently, drying was performed at 150°C for 15 minutes and then calcination was performed in air at 550°C for 30 minutes to form the second catalyst layer (upper catalyst layer) on the first catalyst layer (lower catalyst layer) of the precursor I1 (catalyst I).

### Comparative Example 5

Catalyst J was prepared in the same manner as in Comparative Example 4 except that the mass ratio of alumina 1 and alumina 2 in the second catalyst layer was changed to the values of catalyst J in Table 1 after calcining the second catalyst layer.

### Comparative Example 6

Catalyst K was prepared in the same manner as in Comparative Example 4 except for using alumina 1 instead of alumina 2 in the second catalyst layer.

### Comparative Example 7

Slurry a1 and slurry a2 were prepared in the same manner as in Example 1.

As the three-dimensional structure a cylindrical-shaped cordierite carrier (diameter = 110 mm, length = 97 mm, 750 cells/square inch, 3 mil) was washcoated with the slurry a2 so that the supported amount after calcination met the value of the catalyst L in Table 1 after calcining the first catalyst layer. Subsequently, drying was performed at 150°C for 15 minutes and then calcination was performed in air at 550°C for 30 minutes to obtain a precursor L1 in which the first catalyst layer (lower catalyst layer) was formed on the cordierite carrier.

Subsequently, the precursor L1 was washcoated with the slurry a1 so that the supported amount after calcination met the value of the second catalyst layer of catalyst L in Table 1. Subsequently, drying was performed at 150°C for 15 minutes and then calcination was performed in air at 550°C for 30 minutes to form the second catalyst layer (upper catalyst layer) on the first catalyst layer (lower catalyst layer) of the precursor L1 (catalyst L). Catalyst L has a structure where the first catalyst layer and the second catalyst layer reversed to those in catalyst A (namely, a structure in which the first catalyst layer of catalyst L is the second catalyst layer of catalyst A and the second catalyst layer of catalyst L is the first catalyst layer of catalyst A).

### Comparative Example 8

Slurry a1 was prepared in the same manner as in Example 1. In addition, slurry I2 was prepared in the same manner as in Comparative Example 4.

As the three-dimensional structure a cylindrical-shaped cordierite carrier (diameter = 110 mm, length = 97 mm, 750 cells/square inch, 3 mil) was washcoated with the slurry I2 so that the supported amount after calcination met the value of the first catalyst layer of catalyst M in Table 1. Subsequently, drying was performed at 150°C for 15 minutes and then calcination was performed in air at 550°C for 30 minutes to obtain a precursor M1 in which the first catalyst layer (lower catalyst layer) was formed on the cordierite carrier.

Subsequently, the precursor M1 was washcoated with the slurry a1 so that the supported amount after calcination met the value of the second catalyst layer of catalyst M in Table 1. Subsequently, drying was performed at 150°C for 15 minutes and then calcination was performed in air at 550°C for 30 minutes to form the second catalyst layer (upper catalyst layer) on the first catalyst layer (lower catalyst layer) of the precursor M1 (catalyst M). Catalyst M has a structure where the first catalyst layer and the second catalyst layer reversed to those in catalyst I (namely, a structure in which the first catalyst layer of catalyst M is the second catalyst layer of catalyst I and the second catalyst layer of catalyst M is the first catalyst layer of catalyst I).

Catalyst compositions of catalysts A to E of Examples 1 to 5 and catalysts F to M of Comparative Examples 1 to 8 are shown in Table 1 below. The content of Group 2 elements (including strontium) per 1 liter of the three-dimensional structure in the first catalyst layer of catalysts A to E of Examples 1 to 5 was 0 g/L, and the content of Group 2 elements per 1 liter of the three-dimensional structure other than strontium in the second catalyst layer was 0 g/L. In Table 1 below, "alumina 2 content (%)" indicates the proportion (%) of the mass of alumina 2 relative to the total mass of alumina (total mass of alumina 1 and alumina 2) in each of the catalysts. "AEM/Pd (molar rate)" indicates a molar rate of an alkaline earth metal (Sr or Ba) relative to Pd in each of the catalysts. "AEM/alumina 2 (molar rate)" indicates a molar rate of an alkaline earth metal (Sr or Ba) relative to alumina 2 in each of the catalysts. "Alumina 2 value" indicates the product of the alumina 2 content and the AEM/alumina 2 (molar rate) (=(alumina 2 content)×(AEM/alumina 2 (molar rate)).

Regarding catalysts A to E of Examples 1 to 5 and catalysts F to M of Comparative Examples 1 to 8, the pore volume (mL/g) of pores having a pore size of 2 nm or more and 40 nm or less ("V₂₋₄₀ₙₘ (mL/g)" in Table 2 below), the total pore volume (mL/g), and the proportion (%) of the pore volume of pores having a pore size of 2 nm or more and 40 nm or less relative to the total pore volume ("V₂₋₄₀ₙₘ proportion (%)" in Table 2 below) before and after thermal aging, and the pore maintenance rate (%) [= (V₂₋₄₀ₙₘ after thermal aging)×1100/(V₂₋₄₀ₙₘ before thermal aging)] are shown in Table 2 below.

**[Table 1]**

| Catalyst | First catalyst layer | | | | Second catalyst layer | | | | | | | | Alumina 2 content (%) | AEM/Pd (molar rate) | AEM/ alumina 2 (molar rate) | Alumina 2 value |
|---|---|---|---|---|---|---|---|---|---|---|---|---|---|---|---|---|
| | Rh | CZ1 | Alumina 1 | Supported amount (g/L) | Pd | CZ2 | SrO | SrO₄ | BaSO₄ | Alumina 2 | Alumina 1 | Supported amount (g/L) | | | | |
| A | 0.2 | 30 | 54 | 84.2 | 4.0 | 35 | 7.5 | 0 | 0 | 45 | 0 | 91.5 | 100 | 1.93 | 0.16 | 16.40 |
| B | 0.2 | 30 | 54 | 84.2 | 4.0 | 35 | 7.5 | 0 | 0 | 22.5 | 22.5 | 91.5 | 50 | 1.93 | 0.33 | 16.40 |
| C | 0.2 | 30 | 54 | 84.2 | 4.0 | 35 | 2.5 | 0 | 0 | 45 | 0 | 86.5 | 100 | 0.64 | 0.05 | 5.47 |
| D | 0.2 | 30 | 54 | 84.2 | 4.0 | 35 | 10 | 0 | 0 | 45 | 0 | 94.0 | 100 | 2.57 | 0.22 | 21.87 |
| E | 0.2 | 30 | 54 | 84.2 | 4.0 | 35 | 0 | 13.5 | 0 | 45 | 0 | 97.5 | 100 | 1.96 | 0.17 | 16.65 |
| F | 0.2 | 30 | 54 | 84.2 | 4.0 | 35 | 7.5 | 0 | 0 | 0 | 45 | 91.5 | 0 | 1.93 | - | - |
| G | 0.2 | 30 | 54 | 84.2 | 4.0 | 35 | 0 | 0 | 0 | 45 | 0 | 84.0 | 100 | 0 | 0 | 0 |
| H | 0.2 | 30 | 54 | 84.2 | 4.0 | 35 | 15.0 | 0 | 0 | 45 | 0 | 99.0 | 100 | 3.85 | 0.33 | 32.80 |
| I | 0.2 | 30 | 54 | 84.2 | 4.0 | 35 | 0 | 0 | 17.0 | 45 | 0 | 101.0 | 100 | 1.94 | 0.16 | 16.50 |
| J | 0.2 | 30 | 54 | 84.2 | 4.0 | 35 | 0 | 0 | 17.0 | 22.5 | 22.5 | 101.0 | 50 | 1.94 | 0.33 | 16.50 |
| K | 0.2 | 30 | 54 | 84.2 | 4.0 | 35 | 0 | 0 | 17.0 | 0 | 45 | 101.0 | 0 | 1.94 | - | - |

| Catalyst | First catalyst layer | | | | | | | | Second catalyst layer | | | | Alumina 2 content (%) | AEM/Pd (molar rate) | AEM/ alumina 2 (molar rate) | Alumina 2 value |
|---|---|---|---|---|---|---|---|---|---|---|---|---|---|---|---|---|
| | Pd | CZ2 | SrO | SrO₄ | BaSO₄ | Alumina 2 | Alumina 1 | Supported amount (g/L) | Rh | CZ1 | Alumina 1 | Supported amount (g/L) | | | | |
| L | 4.0 | 35 | 7.5 | 0 | 0 | 45 | 0 | 82.3 | 0.2 | 30 | 54 | 84.2 | 100 | 1.93 | 0.16 | 16.40 |
| M | 4.0 | 35 | 0 | 0 | 17.0 | 45 | 0 | 84.2 | 0.2 | 30 | 54 | 84.2 | 100 | 1.94 | 0.17 | 16.50 |

**[Table 2]**

| Catalyst | Before thermal aging | | | After thermal aging | | | Pore maintenance rate (%) |
|---|---|---|---|---|---|---|---|
| | V₂₋₄₀ₙₘ (mL/g) | Total pore volume (mL/g) | V₂₋₄₀ₙₘ proportion (%) | V₂₋₄₀ₙₘ (mL/g) | Total pore volume (mL/g) | V₂₋₄₀ₙₘ proportion (%) | |
| A | 0.45 | 0.57 | 78.5 | 0.28 | 0.50 | 56.1 | 62.2 |
| B | 0.36 | 0.51 | 70.7 | 0.25 | 0.46 | 54.1 | 69.4 |
| C | 0.46 | 0.57 | 79.7 | 0.23 | 0.39 | 58.5 | 50.0 |
| D | 0.44 | 0.58 | 76.8 | 0.21 | 0.38 | 55.1 | 47.7 |
| E | 0.47 | 0.60 | 78.0 | 0.26 | 0.49 | 52.9 | 55.3 |
| F | 0.26 | 0.41 | 64.4 | 0.14 | 0.27 | 52.2 | 53.8 |
| G | 0.42 | 0.52 | 81.1 | 0.13 | 0.22 | 60.5 | 31.0 |
| H | 0.43 | 0.57 | 75.7 | 0.16 | 0.30 | 52.8 | 37.2 |
| I | 0.48 | 0.64 | 75.2 | 0.19 | 0.36 | 52.3 | 39.6 |
| J | 0.42 | 0.57 | 73.9 | 0.15 | 0.32 | 46.7 | 35.7 |
| K | 0.31 | 0.43 | 72.7 | 0.13 | 0.31 | 42.1 | 41.9 |
| L | 0.47 | 0.54 | 86.8 | 0.23 | 0.51 | 45.2 | 48.9 |
| M | 0.47 | 0.61 | 76.4 | 0.18 | 0.31 | 57.9 | 38.3 |

### [Evaluation Test for Purification Performance of Exhaust Gas: Light-Off (LO) Test]

Regarding catalysts A to E of Examples 1 to 5 and catalysts F to M of Comparative Examples 1 to 8, purification performance of exhaust gas was evaluated by the following light-off (LO) test. Specifically, each of the catalysts (0.92 L) was placed on the downstream side 25 cm away from an exhaust port of an MPI engine with 3.0-liter displacement. Thermal aging (durability treatment) was performed at 1000°C (catalyst inlet temperature) for 50 hours with A/F = 14.6, amplitude = ±0.5, and frequency = 1.0 Hz. The catalyst inlet temperature was measured at 1 cm from the catalyst end face.

Subsequently, exhaust gas in which the catalyst inlet gas temperature was increased from 150°C to 500°C at 20°C/minute was made to flow through each of the catalysts with A/F = 14.6, amplitude = ±0.5, and frequency = 1.0 Hz. Here, the gas discharged from the catalyst outlet was sampled to calculate each of purification rates of CO, HC, and NOx. The temperature at which the purification rate of each gas reached 50% is referred to as T50 (°C) and the results are shown in Table 3 and Fig. 1 below. It is understood that the lower T50 is, the higher an ignitability of each of the gases is (the higher the catalytic performance is).

**[Table 3]**

| Catalyst | T50 (°C) | | |
|---|---|---|---|
| | CO | HC | NOx |
| A | 338 | 343 | 336 |
| B | 342 | 350 | 341 |
| C | 340 | 344 | 337 |
| D | 342 | 345 | 338 |
| E | 342 | 345 | 338 |
| F | 353 | 358 | 351 |
| G | 347 | 351 | 346 |
| H | 349 | 353 | 347 |
| I | 354 | 360 | 352 |
| J | 358 | 361 | 353 |
| K | 359 | 362 | 354 |
| L | 359 | 360 | 356 |
| M | 351 | 353 | 350 |

From the above Table 3 and Fig. 1, it can be understood that catalysts A to E of Examples 1 to 5 have a significantly lower T50 regarding each of the gases (CO, HC, and NOx) than catalysts F to M of Comparative Examples 1 to 8, namely, they have a significantly higher catalytic performance.

The present application is based on Japanese Patent Application No. 2021-184009 filed on November 11, 2021, the disclosed content of which is incorporated by reference in its entirety.

## Claims

1. A catalyst for exhaust gas purification, comprising a first catalyst layer and a second catalyst layer sequentially laminated onto a three-dimensional structure, wherein
the first catalyst layer contains rhodium,
the second catalyst layer contains palladium, strontium, and an alumina, and the strontium content in the second catalyst layer (in terms of strontium oxide) per 1 liter of the three-dimensional structure is more than 0 g/L and less than 15 g/L, and
the catalyst for exhaust gas purification has a pore volume of pores having a pore size of 2 nm or more and 40 nm or less of more than 0.26 mL/g in a pore volume distribution measured by nitrogen adsorption method.

2. The catalyst for exhaust gas purification according to claim 1, having a total pore volume of 0.45 mL/g or more.

3. The catalyst for exhaust gas purification according to claim 1, wherein the alumina contains a large pore-volume alumina having a pore volume of pores having a pore size of 2 nm or more and 40 nm or less of 0.60 mL/g or more in a pore volume distribution measured by nitrogen adsorption method.

4. The catalyst for exhaust gas purification according to claim 3, wherein the large pore-volume alumina is contained in the second catalyst layer in a proportion of 50 mass% or more relative to a total mass of the alumina.

5. The catalyst for exhaust gas purification according to claim 3, wherein the large pore-volume alumina is contained in a proportion of more than 20 mass% relative to a total mass of the second catalyst layer.

6. The catalyst for exhaust gas purification according to claim 3, wherein a molar rate of the strontium (in terms of strontium oxide) relative to the large pore-volume alumina is 0.01 or more and less than 0.8.

7. The catalyst for exhaust gas purification according to claim 1, wherein the pore maintenance rate after a thermal aging is 42.0% or more and less than 80.0%.

8. The catalyst for exhaust gas purification according to claim 1, wherein a content of a Group 2 element other than the strontium in the second catalyst layer per 1 liter of the three-dimensional structure is less than 0.1 g/L.

9. The catalyst for exhaust gas purification according to claim 1, wherein the first catalyst layer and the second catalyst layer contain a ceria-zirconia composite oxide.

10. A method for purifying exhaust gas of a gasoline engine, comprising treating exhaust gas emitted from a gasoline engine using the catalyst for exhaust gas purification according to any one of claims 1 to 9.
